Europäisches Patentamt

European Patent Office

Office européen des brevets

(19)

(11) Numéro de publication: **0 213 018**
A1

(12) # DEMANDE DE BREVET EUROPEEN

(21) Numéro de dépôt: 86401646.4

(22) Date de dépôt: 23.07.86

(51) Int. Cl.⁴: **F 16 K 3/32,** B 62 D 53/08

(30) Priorité: 14.08.85 FR 8512406

(43) Date de publication de la demande: 04.03.87
Bulletin 87/10

(84) Etats contractants désignés: AT BE CH DE GB IT LI LU
NL SE

(71) Demandeur: **Jeanson, René Henri, Rue de la Cour
AUZAY, F-85200 Fontenay le Comte (FR)**
Demandeur: **Lamothe, Guy, Rue Gallot,
F- 85200 Fontenay le Comte (FR)**

(72) Inventeur: **Jeanson, René Henri, Rue de la Cour AUZAY,
F-85200 Fontenay le Comte (FR)**
Inventeur: **Lamothe, Guy, Rue Gallot, F- 85200 Fontenay
le Comte (FR)**

(74) Mandataire: **Chameroy, Claude et al, c/o Cabinet
Malemont 42, avenue du Président Wilson, F-75116 Paris
(FR)**

(54) **Clapet, notamment pour dispositif d'attelage extensible de véhicule, comportant un passage de section variable à proximité de son siège.**

(57) Le clapet selon l'invention comprend un corps (9) dans lequel sétend un canal (10) communiquant avec un orifice d'entrée (11) et un orifice de sortie (12) susceptibles d'être reliés respectivement à un récepteur hydraulique (2) et à un réservoir (5) faisant partie d'un circuit hydraulique, un siège (13) ménagé dans la paroi du canal (10), entre les orifices d'entrée (11) et de sortie (12), un tiroir (14) déplaçable dans le canal (10) entre une position de fermeture dans laquelle il s'appuie contre le siège (13) et isole les orifices d'entrée (11) et de sortie (12) et une position d'ouverture dans laquelle il est éloigné du siège (13) et établit une communication entre les orifices d'entrée (11) et de sortie (12), et des organes élastiques (15) pour solliciter le tiroir (14) dans sa position de fermeture.

Selon l'invention, le tiroir (14) délimite avec la paroi du canal (10) qui est contiguë au siège (13) un espace annulaire dont la section est plus faible à son extrémité adjacente audit siège qu'à son autre extrémité.

Ce clapet est plus particulièrement destiné à être monté dans le circuit hydraulique d'un dispositif d'attelage extensible pour véhicule.

Clapet, notamment pour dispositif d'attelage extensible de véhicule, comportant un passage de section variable à proximité de son siège

La présente invention concerne un clapet comprenant un corps dans lequel s'étend un canal communiquant avec un orifice d'entrée et un orifice de sortie susceptibles d'être reliés respectivement à un récepteur hydraulique et à un réservoir faisant partie d'un circuit hydraulique, un siège ménagé dans la paroi du canal, entre les orifices d'entrée et de sortie, un tiroir déplaçable dans le canal entre une position de fermeture dans laquelle il s'appuie contre le siège et isole les orifices d'entrée et de sortie et une position d'ouverture dans laquelle il est éloigné du siège et établit une communication entre les orifices d'entrée et de sortie, et des organes élastiques pour solliciter le tiroir dans sa position de fermeture.

Le débit du fluide hydraulique qui traverse les clapets de ce type varie en général très rapidement d'une valeur nulle à une valeur maximum dès que le tiroir cesse de s'appuyer contre le siège. Cette variation brutale du débit a toutefois l'inconvénient de favoriser la formation d'à-coups dans le fonctionnement du circuit hydraulique et d'être ainsi à l'origine d'une détérioration anormalement rapide des organes entrant dans la constitution de ce dernier.

La présente invention se propose, entre autres, de remédier à ces inconvénients et, pour ce faire, elle a pour objet un clapet du type susmentionné qui se caractérise en ce que le tiroir délimite avec la paroi du canal qui est contiguë au siège un espace annulaire dont la section est plus faible à son extrémité adjacente audit siège qu'à son autre extrémité.

Ainsi, lorsque le tiroir commence à s'éloigner de sa position de fermeture, le fluide hydraulique ne dispose que d'un passage étroit pour se diriger vers l'orifice de sortie du clapet et se trouve donc soumis à un freinage intense grâce auquel le récepteur hydraulique peut être actionné progressivement, sans à-coups et à une vitesse faible ou modérée.

En revanche, lorsque le tiroir s'est suffisamment éloigné de sa position de fermeture, le fluide hydraulique dispose d'un passage plus grand pour se diriger vers l'orifice de sortie de sorte que le récepteur hydraulique peut être actionné plus rapidement.

Le clapet conforme à l'invention permet par conséquent de contrôler le fonctionnement du récepteur hydraulique en réglant judicieusement le débit du fluide circulant vers l'orifice de sortie pendant que le tiroir se déplace par rapport au siège.

Selon un mode de réalisation particulier de l'invention, l'espace annulaire comprend un premier tronçon adjacent au siège, ayant une section constante et auquel fait suite un second tronçon ayant une section croissante, la longueur totale du premier et du second tronçons étant sensiblement égale à la course du tiroir.

Selon ce mode de réalisation, le débit du fluide se dirigeant vers l'orifice de sortie reste faible pendant que le tiroir s'éloigne de sa position de fermeture d'une distance sensiblement égale à la longueur du premier tronçon, puis augmente progressivement pendant que le tiroir s'éloigne d'une distance sensiblement égale à la longueur du second tronçon. Le processus se déroule bien entendu en sens inverse lorsque le tiroir revient dans sa position de fermeture.

De préférence, les surfaces en regard délimitant le premier tronçon sont parallèles et espacées l'une de l'autre d'environ 0,1 mm à environ 0,25 mm, tandis que les surfaces en regard délimitant le second forment entre elles un angle de 10 à 20°.

Avantageusement, le corps comporte un second canal s'étendant entre les orifices d'entrée et de sortie et dans lequel est disposée une soupape de sécurité tarée de manière à s'ouvrir lorsque la pression du fluide dans le récepteur hydraulique dépasse une valeur maximum prédéterminée.

Les risques pour que le clapet et le récepteur hydraulique puissent être détériorés lors de la création d'une surpression accidentelle dans la partie du circuit hydraulique reliant ces deux organes peuvent ainsi être totalement éliminés.

Un mode d'exécution de la présente invention sera décrit ci-après à titre d'exemple nullement limititatif en référence au dessin annexé dans lequel :

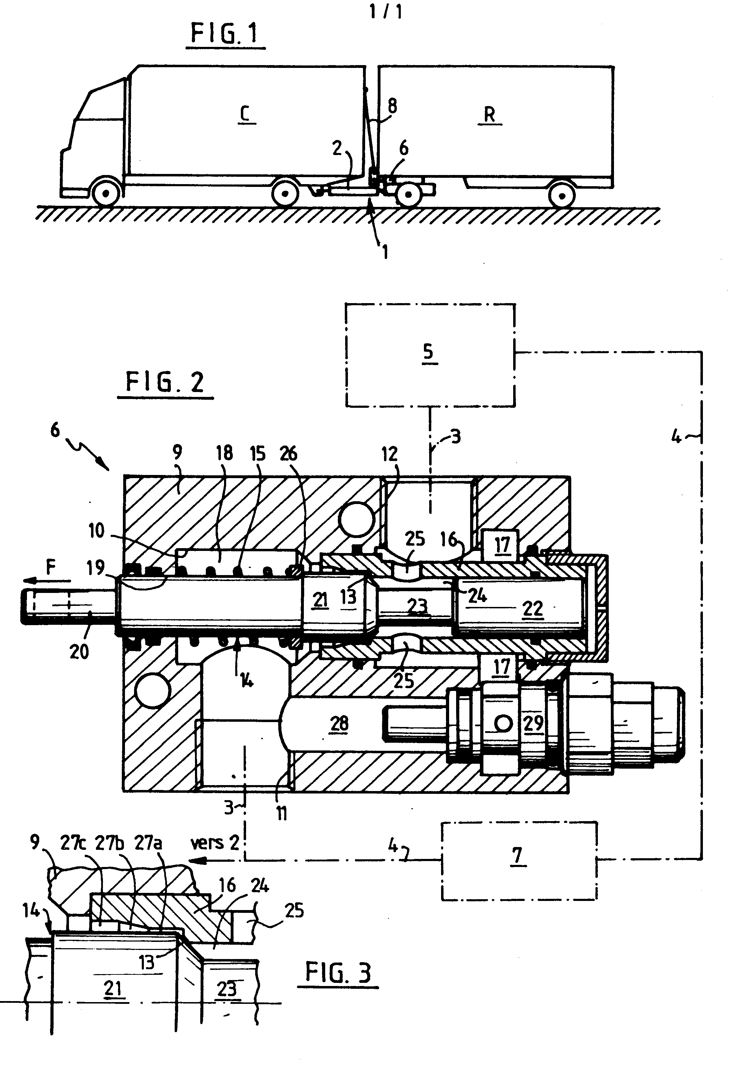

. la figure 1 est une vue de côté d'un camion à l'arrière duquel est attelée une remorque équipée d'un dispositif d'attelage extensible dont le circuit hydraulique comporte un clapet conforme à l'invention ;

. la figure 2 est une vue en coupe et à échelle agrandie de ce clapet, une partie du circuit hydraulique du dispositif d'attelage extensible étant représentée en traits mixtes ; et

. la figure 3 est une vue partielle et à échelle agrandie du tiroir du clapet visible sur la figure 2, le tiroir étant représenté dans sa position de fermeture.

L'ensemble routier que l'on peut voir sur la figure 1 comprend un camion C à l'arrière duquel est attelée une remorque R pourvue d'un dispositif d'attelage extensible 1.

Ce dispositif permet de maintenir l'avant de la remorque à seulement 20 ou 30 centimètres de l'arrière du camion lorsque l'ensemble routier se déplace en ligne droite. Il comprend d'une manière connue en soi un vérin hydraulique 2 dont le cylindre est articulé sur le train avant de la remorque et dont la tige de piston est accrochée de manière amovible à l'arrière du camion, un circuit hydraulique comprenant deux conduites 3, 4 reliant le vérin 2 à un réservoir à fluide hydraulique 5, la conduite 3 étant pourvue d'un clapet 6 normalement fermé et la conduite 5 d'une pompe 7, des moyens de détection 8 conformés pour commander l'ouverture du clapet 6 lorsque les axes longitudinaux du camion et de la remorque forment un certain angle entre eux, et un fluide sous pression, de préférence de l'air comprimé, destiné à refouler dans le réservoir 5 le flui-hydraulique contenu dans le vérin 2 lorsque le clapet 6 est ouvert, le fluide sous pression permettant l'allongement du dispositif d'attelage en faisant sortir la tige de piston du vérin 2.

Le clapet 6 qui est représenté en coupe sur la figure 2, comprend un corps 9 dans lequel s'étend un canal 10 communiquant avec un orifice d'entrée 11 et un orifice de sortie 12 reliés respectivement au vérin 2 et au réservoir 5, un siège 13 ménagé dans la paroi du canal 10 entre les orifices d'entrée 11 et de sortie 12, un tiroir 14 déplaçable dans le canal 10 entre une position de fermeture (visible sur les figures 2 et 3) dans laquelle il s'appuie contre le siège 13 et isole les orifices d'entrée 11 et de sortie 12 et une position d'ouverture dans laquelle il est éloigné du siège et établit une communication entre les orifices d'entrée 11 et de sortie 12, et un ressort 15 sollicitant le tiroir 14 dans sa position de fermeture.

Dans le mode de réalisation représenté, le siège 13 est réalisé dans la paroi interne d'un manchon 16 enfilé dans le canal 10 avec lequel il ménage une chambre annulaire 17 communiquant avec l'orifice de sortie 12.

Le tiroir 14 s'étend dans le manchon 16, ménage une chambre annulaire 18 avec la paroi de la partie du canal 10 qui est reliée à l'orifice d'entrée 11, s'étend de façon étanche dans un perçage 19 réalisé dans le corps 9 et se prolonge à l'extérieur de celui-ci par un téton axial 20 relié par l'intermédiaire d'un organe approprié (non représenté) aux moyens de détection 8 du dispositif d'attelage extensible.

Comme on peut le voir sur la figure 2, le tiroir 14 comporte deux tronçons cylindriques 21, 22 reliés par un troisième tronçon 23 délimitant une chambre annulaire 24 avec le manchon 16, cette chambre étant reliée à la chambre annulaire 17 par l'intermédiaire de perçages 25 réalisés dans la paroi du manchon. On précisera ici que l'extrémité du tronçon 21 qui constitue l'une des extrémités de la chambre 24 est tronconique de manière à coopérer de façon étanche avec le siège 13 lorsque le tiroir 14 est dans sa position de fermeture.

Quant au ressort 15, il est enfilé sur la partie du tiroir qui ménage la chambre annulaire 18 avec la paroi latérale du canal 10, l'une de ses extrémités s'appuyant contre le corps 9, à la périphérie de perçage 19, tandis que son autre extrémité s'appuie contre une rondelle 26 en butée contre le tronçon 21 du tiroir.

Des joints d'étanchéité sont par ailleurs prévus entre le corps 9 et la surface latérale extérieure du manchon 16, entre la surface latérale intérieure de celui-ci et le tiroir 14, et entre ce dernier et la paroi du perçage 19.

Comme le montre clairement la figure 3, le tiroir 14 délimite avec la paroi du manchon 16 qui est contiguë au siège 13, un espace annulaire sont la section est plus faible à son extrémité adjacente audit siège qu'à son autre extrémité. Plus précisément, cet espace annulaire comprend un premier tronçon 27a adjacent au siège et auquel fait suite un second tronçon 27b se prolongeant par un troisième tronçon 27c débouchant dans la chambre annulaire 18, les surfaces en regard qui délimitent le tronçon 27a étant parallèles et espacées l'une de l'autre d'environ 0,1 mm à environ 0,25 mm tandis que les surfaces en regard qui délimitent le tronçon 27b forment entre elles un angle de l'ordre de 10 à 20°. En ce qui concerne la longueur totale des tronçons 27a et 27b, elle est de l'ordre de la course du tiroir 14.

Comme le montre également la figure 2, le corps 9 du clapet comporte un second canal 28 s'étendant en parallèle avec le premier canal 10, entre l'orifice d'entrée 11 et la chambre annulaire 17, ainsi qu'une soupape de sécurité 29 obturant le second canal 28, cette soupape étant tarée de manière à s'ouvrir lorsque la pression du fluide hydraulique dans le vérin 2 dépasse une valeur maximum prédéterminée.

5

On va maintenant décrire le fonctionnement du clapet selon la présente invention.

Lorsque le camion et la remorque sont alignés l'un derrière l'autre, les organes de détection 8 du dispositif d'attelage extensible n'exercent aucune action sur le téton 20. Dans ce cas, le tiroir 14 est maintenu contre le siège 13 par le ressort 15 et empêche le fluide hydraulique de circuler dans le canal 10. En supposant que la pression du fluide hydraulique contenu dans le vérin 2 est inférieure à la pression de tarage de la soupape 29, on conçoit aisément que le fluide hydraulique ne peut circuler entre le vérin 2 et le réservoir 5 par l'intermédiaire du canal 28.

Lorsque le camion et la remorque négocient un virage à grand rayon ou virent à faible vitesse, les organes de détection 8 exercent sur le téton 20 une faible traction (dirigée dans le sens de la flèche F sur la figure 2) sous l'action de laquelle le tiroir s'éloigne légèrement de sa position de fermeture. Dans ce cas, le fluide hydraulique peut circuler du vérin 2 vers le réservoir 5 en empruntant le passage 27a. Comme le fluide hydraulique est fortement freiné dans ce passage, la tige de piston du vérin sort du cylindre de celui-ci avec une vitesse faible ou modérée et sans à-coups.

Lorsque le camion et la remorque négocient à grande vitesse un virage à faible rayon, les organes de détection 8 exercent sur le téton 20 une traction brutale (dirigée dans le sens de la flèche F) sous l'action de laquelle le tiroir s'éloigne nettement de sa position de fermeture, par exemple sur une distance telle que l'extrémité tronconique du tronçon 21 du tiroir vienne à l'aplomb du tronçon 27b ou du tronçon 27c. Dans ce cas, le fluide hydraulique circule dans le canal 10 avec un grand débit tandis que la tige de piston du vérin sort rapidement du cylindre de celui-ci.

Enfin, lorsqu'une surpression accidentelle est créée dans le vérin 2, la soupape 29 s'ouvre automatiquement pour permettre au fluide hydraulique de se diriger dans le réservoir 5 en empruntant le canal 28.

Revendications

1. Clapet comprenant un corps (9) dans lequel s'étend un canal (10) communiquant avec un orifice d'entrée (11) et un orifice de sortie (12) susceptibles d'être reliés respectivement à un récepteur hydraulique (2) et à un réservoir (5) faisant partie d'un circuit hydraulique, un siège (13) ménagé dans la paroi du canal (10), entre les orifices d'entrée (11) et de sortie (12), un tiroir (14) déplaçable dans le canal (10) entre une position de fermeture dans laquelle il s'appuie contre le siège (13) et isole les orifices d'entrée (11) et de sortie (12) et une position d'ouverture dans laquelle il est éloigné du siège (13) et établit une communication entre les orifices d'entrée (11) et de sortie (12), et des organes élastiques (15) pour solliciter le tiroir (14) dans sa position de fermeture, caractérisé en ce que le tiroir (14) délimite avec la paroi du canal (10) qui est contiguë au siège (13) un espace annulaire (27a, 27b) dont la section est plus faible à son extrémité adjacente audit siège qu'à son autre extrémité.

2. Clapet selon la revendication 1, caractérisé en ce que l'espace annulaire (27a, 27b) comprend un premier tronçon (27a) adjacent au siège (13), ayant une section constante et auquel fait suite un second tronçon (27b) ayant une section croissante, la longueur totale du premier et du second tronçons étant sensiblement égale à la course du tiroir (14).

3. Clapet selon la revendication 2, caractérisé en ce que les surfaces en regard délimitant le premier tronçon (27a) sont parallèles et espacées l'une de l'autre d'environ 0,1 mm à environ 0,25 mm tandis que les surfaces en regard délimitant le second tronçon (27b) forment entre elles un angle de l'ordre de 10 à 20°.

4. Clapet selon l'une quelconque des revendications précédentes, caractérisé en ce que le corps (9) comporte un second canal (28) s'étendant entre les orifices d'entrée (11) et de sortie (12) et dans lequel est disposée une soupape de sécurité (29) tarée de manière à s'ouvrir lorsque la pression du fluide dans le récepteur hydraulique (2) dépasse une valeur maximum prédéterminée.

5. Véhicule remorquable comprenant un dispositif d'attelage extensible (1) par l'intermédiaire duquel il est susceptible d'être relié à un autre véhicule, ce dispositif d'attelage comprenant un circuit hydraulique comportant un vérin hydraulique (2) et un réservoir (5) reliés par une conduite

7

(3) renfermant un clapet (6) selon l'une quelconque des revendications précédentes, et des moyens de détection (8) reliés au clapet (6), ces moyens étant conformés pour éloigner le tiroir (14) de sa position de fermeture lorsque les axes longitudinaux des deux véhicules attelés (C, R) forment un angle prédéterminé entre eux.

FIG.1

0213018

1/1

FIG.2

FIG.3

vers 2

# 0213018

**Office européen des brevets**

**RAPPORT DE RECHERCHE EUROPEENNE**

Numero de la demande

EP 86 40 1646

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 424 404 (CONTROLS CO.)<br>* Page 2, lignes 27-86; figures * | 1-3 | F 16 K 3/32<br>B 62 D 53/08 |
| A | US-A-4 015 631 (HAYES)<br>* Colonne 2, lignes 31-33; figures * | 1,2 | |
| A | US-A-3 255 777 (RICE)<br>* Colonne 2, lignes 16-27; figures * | 1,4 | |
| A | US-A-3 244 434 (REED)<br>* Colonne 1, ligne 62 - colonne 2, ligne 43; figures * | 1,5 | |

DOMAINES TECHNIQUES RECHERCHES (Int. Cl.4)

F 16 K
B 65 D

Le présent rapport de recherche a été établi pour toutes les revendications

| Lieu de la recherche | Date d'achèvement de la recherche | Examinateur |
|---|---|---|
| LA HAYE | 04-11-1986 | LEMERCIER D.L.L. |